# EUROPÄISCHE PATENTANMELDUNG

(11) **EP 4 535 652 A1**
(43) Veröffentlichungstag der Anmeldung: **09.04.2025**
(21) Anmeldenummer: 24204657.1
(22) Anmeldetag: 04.10.2024
(51) Int. Cl.: H02S 20/10, H02S 40/10, F24S 25/12

(54) **BEWUCHSSCHUTZ UND ZUGEHÖRIGE PHOTOVOLTAIKANLAGE**

(30) Priorität: 05.10.2023 EP 23201960
(71) Anmelder: Next2Sun Technology GmbH, 66763 Dillingen (DE)
(72) Erfinder: HILDEBRANDT, Heiko, 79110 Freiburg (DE); HOFF, Florian, 66709 Weiskirchen (DE); BENDIX, Peter, 79117 Freiburg (DE); SCHNEIDER, Thomas, 66386 St. Ingbert (DE); OLLINGER, Stefan, 66663 Merzig (DE)
(74) Vertreter: Mertzlufft-Paufler, Cornelius

(57) **Zusammenfassung**

Es wird ein einfach aus wenigstens drei Teilen herstellbarer Bewuchsschutz (5) vorgestellt, bei dem mittels wenigstens eines Verbindungsstifts (10) zwei Teile (7, 8), die eine umlaufende Außenwandung (9) zum Abschirmen von Pflanzen ausbilden, mittels eines jeweiligen Formschlusses mechanisch miteinander verbunden werden können. Kennzeichnend für den erfindungsgemäßen Ansatz kann dabei sein, dass die beiden Teile (7, 8) zueinander keinen direkten Formschluss ausbilden, dass aber jedes der beiden Teile (7 und 8) jeweils formschlüssig mit dem wenigstens einen Verbindungsstift (10) verbunden ist, sobald der Verbindungsstift (10) vollständig in beide Teile (7, 8), vorzugsweise in axialer Richtung, eingeführt ist (vgl.

## Beschreibung

Die Erfindung betrifft einen (mehrteiligen) Bewuchsschutz, der zum Abschirmen von Anlagenteilen, wie beispielsweise vertikal verlaufenden Kabeln oder Pfosten einer Photovoltaikanlage, von Pflanzen, die im Erdreich in der Nähe der Anlagenteile / des Pfostens empor wachsen, vorgesehen ist und zu diesem Zweck eingesetzt werden kann. Insbesondere kann ein solcher Bewuchsschutz dazu dienen, die Pfosten einer Tragkonstruktion einer im freien Feld errichteten Photovoltaikanlage von Pflanzen abzuschirmen, die im Erdreich in der Nähe des jeweiligen Pfostens empor wachsen. Die Erfindung betrifft ferner eine zugehörige Photovoltaikanlage.

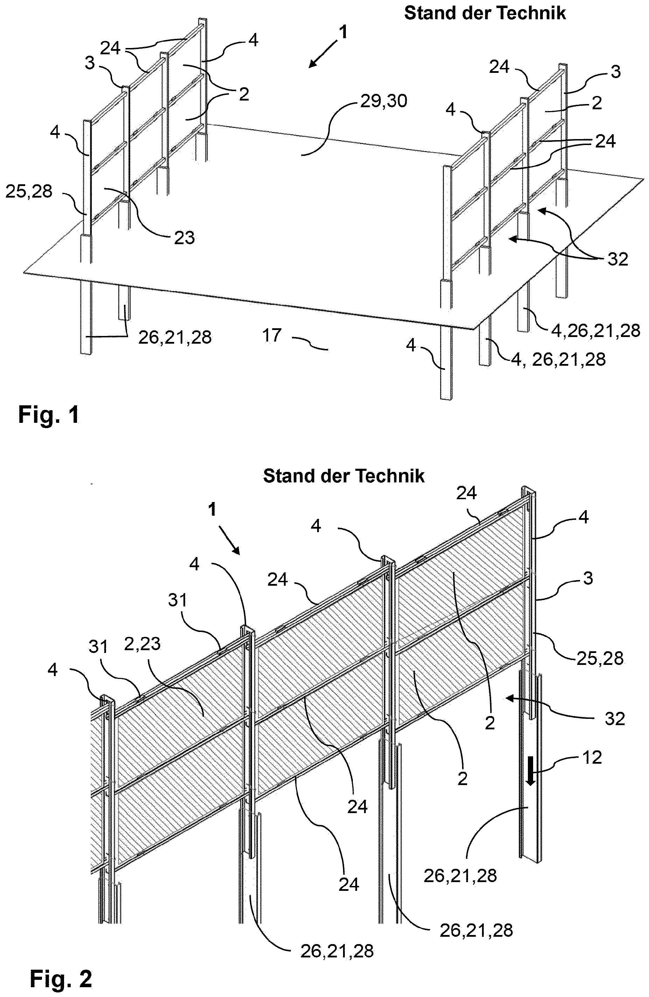

Im Stand der Technik werden bereits zur solaren Stromerzeugung Photovoltaik(PV)-Anlagen mit bifazialen PV-Modulen eingesetzt, die von beiden Seiten her Sonnenlicht empfangen und in elektrischen Solarstrom umwandeln können. Bei solchen PV-Anlagen, die im freien Feld, also beispielsweise auf einer landwirtschaftlich genutzten Wiese, aufgestellt werden, gibt es dann typischerweise mehrere voneinander beabstandete parallel verlaufende Reihen von vertikal übereinander angeordneten bifazialen PV-Modulen (Vgl. Figur 1). Die zugehörige Tragkonstruktion der PV-Anlage, die die PV-Module trägt, besteht dann oftmals aus vertikal verlaufenen Pfosten und horizontal verlaufenden Quer-Riegeln (Vgl. Figur 1).

Die Pfosten werden oftmals als Rammprofile mittels eines bestimmten metallischen Längsprofils ausgestaltet, welches in das Erdreich eingerammt wird, um den Pfosten im Erdreich zu befestigen. Sehr häufig werden dabei seitliche offene C- oder I-Längsprofile als Rammprofile eingesetzt, die also seitlich geöffnet sind, typischerweise in derjenigen Richtung, in welcher die Modulebene (= Ebene, in welcher die aktiven Flächen der PV-Module angeordnet sind) verläuft.

Beim Pflegen der PV-Anlage muss nun sichergestellt werden, dass der Bewuchs (Gräser, Sträucher und Hecken), der im Erdreich entsteht, nicht so weit anwächst, dass eine Verschattung der untersten Reihe an PV-Modulen stattfindet. Dies wird derzeit mit üblichen Freischneidern bewerkstelligt, die rotierende Schneidewerkzeuge aufweisen und mit denen der Freiraum zwischen den Pfosten und unterhalb der vertikal übereinander montierten PV-Module gemäht wird. Hierbei besteht einerseits die Gefahr, dass die Pfosten der Tragkonstruktion der PV-Anlage durch die Schneidwerkzeuge beschädigt werden. Und andererseits ist es schwierig, Bewuchs zu stutzen, der beispielsweise im Innern eines C-Profils entsteht und dort emporwächst. Eine vollständige Vermeidung einer Beschattung der PV-Module durch Bewuchs lässt sich daher derzeit oftmals nur mit hohem manuellen Arbeitsaufwand und damit mit hohen Kosten sicherstellen.

Vor diesem Hintergrund hat es sich die Erfindung zur Aufgabe gesetzt, die Pflege von Photovoltaik-Anlagen, die im freien Feld aufgestellt sind, zu vereinfachen. Insbesondere soll das Mähen mit größeren Mähgeräten sicher und einfach und damit schnell und kostengünstig erfolgen können und dabei soll sichergestellt werden, dass der gesamte Bewuchs in der Nähe der Pfosten der Tragkonstruktion effizient entfernt werden kann, sodass eine Verschattung der untersten Reihen der PV-Module vermieden werden kann, ohne dabei jedoch die Tragkonstruktion und/oder die eingesetzten Mähwerkzeuge übermäßig abzunutzen.

Zur Lösung dieser Aufgabe sind erfindungsgemäß bei einem mehrteiligen Bewuchsschutz die Merkmale von Anspruch 1 vorgesehen. Das erfindungsgemäße Konzept ist dabei nicht nur auf bifaziale PV-Anlagen, sondern auch auf konventionelle Photovoltaik-Anlagen anwendbar, die ebenfalls über Anlagenteile wie Kabel oder Pfosten verfügen, die in vertikaler Richtung verlaufen und/oder im Erdreich verankert sind und anfällig für einen Bewuchs sind.

Insbesondere wird somit erfindungsgemäß zur Lösung der Aufgabe bei einem Bewuchsschutz der eingangs genannten Art vorgeschlagen, dass der Bewuchsschutz ein erstes Teil, ein zweites Teil und wenigstens einen Verbindungsstift umfasst, wobei die beiden Teile mithilfe des wenigstens einen Verbindungsstifts miteinander verbunden sind und wobei der wenigstens eine Verbindungsstift zu jedem der beiden Teile jeweils einen Formschluss ausbildet.

Unter Formschluss werden hier mechanische Verbindungen verstanden, bei der zwei oder mehr Teile aufgrund ihrer geometrischen Formen so zusammenpassen, dass sie ineinandergreifen. Aufgrund der Formgebung der Teile verhindert eine solche formschlüssige Verbindung eine relative Bewegung zwischen den Teilen in mindestens einer Richtung (hier bevorzugt in x- und y-Richtung, wie anhand der Zeichnungen klar werden wird). Entlang der Einschubrichtung (z.B. z-Richtung oder aber eine horizontale oder sogar schräge Richtung) kann hingegen eine Relativbewegung zwischen Verbindungsstift und jeweiligem Teil des Bewuchsschutzes stattfinden.

Um den Formschluss zwischen Verbindungsstift und jeweiligen Teil auszubilden kann vorgesehen sein, dass der wenigstens eine / der jeweilige Verbindungsstift in das erste Teil und in das zweite Teil, insbesondere gleichzeitig, entlang einer Einschubrichtung (diese kann bevorzugt einer Längsrichtung des Bewuchsschutzes entsprechen) eingeschoben/eingesteckt wird. Mit anderen Worten ist der wenigstens eine Verbindungsstift somit reversibel in beide Teile einsteckbar und ausziehbar. Zwischen den beiden Teilen muss dabei nicht zwingend ein Formschluss bestehen, sondern deren mechanische Verbindung ist, insbesondere ausschließlich, mittels des wenigstens einen Verbindungsstifts hergestellt.

Um die gewünschte mechanische Verbindung zwischen den beiden Teilen in einer finalen Montageposition des Bewuchsschutzes direkt über dem Erdreich herzustellen, kann der wenigstens eine Verbindungsstift zur Ausbildung des jeweiligen Formschlusses in entsprechende Stiftaufnahmen (insbesondere ausgestaltet als Einführkanäle), die am jeweiligen Teil oder vom jeweiligen Teil ausgebildet sind, in einer Einschubrichtung, insbesondere in einer axialen Längsrichtung des Bewuchsschutzes, in die beiden Teile eingeführt werden. Die Einschubrichtung entspricht dabei bevorzugt der Längsrichtung des Pfostens (der mit dem Bewuchsschutz abgeschirmt werden soll) und somit der Vertikalen in der finalen Montageposition. Es sind aber auch Ausgestaltungen realisierbar, bei denen der Verbindungstift quer oder schräg zur Längsrichtung des Pfostens in die beiden Teile eingeführt wird. Denn auch z.B. bei leicht schräger Einschubrichtung lässt sich der Verbindungsstift im Erdreich verankern, wobei eine vertikale Einschubrichtung hierzu zu bevorzugen ist.

Das erste Teil als auch das zweite Teil kann dabei jeweils eine seitliche Öffnung aufweisen, die mit dem jeweils anderen Teil zumindest teilweise oder aber vollständig verschlossen werden kann, wobei die jeweilige Öffnung quer zu einer Längsrichtung des Bewuchsschutzes orientiert ist.

Erfindungsgemäß kann die Aufgabe auch durch weitere vorteilhafte Ausführungen gemäß den Unteransprüchen gelöst werden, die im Folgenden erläutert werden:
So ist es für eine hohe mechanische Stabilität des Bewuchsschutzes vorteilhaft, wenn der Formschluss zwischen Verbindungsstift und dem jeweiligen Teil jeweils über eine gesamte axiale Höhe H des Bewuchsschutzes besteht, sobald der wenigstens eine Verbindungsstift vollständig in das jeweilige Teil eingeführt ist.

Eine bevorzugte Ausgestaltung sieht vor, dass der Bewuchsschutz zwei Verbindungsstifte umfasst, wobei diese vorzugsweise gleichartig oder sogar identisch ausgebildet sein können. Jeder dieser beiden Verbindungsstifte bildet dabei jeweils einen Formschluss zu beiden Teilen aus, sodass jeder der Verbindungsstifte eine jeweilige mechanische Verbindung zwischen den beiden Teilen herstellt. Mittels der beiden Verbindungsstifte kann der Bewuchsschutz insbesondere beidseitig im Erdreich verankerbar sein bzw. verankert sein.

Die beiden Teile aber auch der wenigstens eine Verbindungsstift können jeweils als umgebogene metallische Blechteile ausgestaltet sein. Eine bevorzugte, weil kostengünstige, Möglichkeit der Herstellung stellt dabei das Rollumformen dar.

Die beiden Teile, die die Abschirmung des Anlagenteils/des Pfostens gegenüber den Pflanzen bewirken, können jeweils, und zwar vorzugsweise beidseitig, wenigstens eine Stiftaufnahme ausbilden, in die der jeweilige Verbindungsstift (in axialer Richtung) einführbar ist. Bevorzugt können solche Stiftaufnahmen in Form von axialen Einführkanälen ausgestaltet sein. Hierbei ist es besonders bevorzugt, wenn die Stiftaufnahmen durch eine Umformung des jeweiligen Teils hergestellt sind, was besonders einfach mittels Rollumformen möglich ist. Die besagten Einführkanäle können dabei bevorzugt entlang der gesamten axialen Höhe H des jeweiligen Teils ausgestaltet sein. Die Stiftaufnahmen sollten dabei bodenseitig offen ausgestaltet sein, damit der Verbindungsstift als Erdnagel in das Erdreich eingetrieben werden kann.

Die Stiftaufnahmen sollten innenseitig an einer Innenwandung des Bewuchsschutzes ausgestaltet werden, damit eine durchweg konvexe Außenoberfläche des Bewuchsschutzes gewährleistet werden kann. Dies hat Vorteile, um emporwachsende Pflanzen effizient mit Schneidwerkzeugen entfernen zu können. Bei einer solchen Ausgestaltung ist der jeweilige Verbindungsstift somit innenseitig in das jeweilige Teil eingesteckt. Mit anderen Worten verläuft dann der Verbindungsstift entlang der Innenwandung des Bewuchsschutzes.

Wie bereits erwähnt, kann der wenigstens eine Verbindungsstift aus metallischem Blech durch Umformung hergestellt sein, vorzugsweise mittels Rollumformen eines geeigneten bereits zugeschnittenen Blechs.

Eine weitere vorteilhafte Ausgestaltung, die insbesondere die mechanische Steifigkeit des Verbindungsstifts erhöht, sofern dieser als umgeformtes Blech ausgestaltet ist, sieht vor, dass der wenigstens eine Verbindungsstift einen linken und einen rechten Aufschubkanal ausbildet (dies gilt somit für jeden Verbindungsstift). Derartige Aufschubkanäle können dann beim Einführen des Verbindungsstifts in das jeweilige Teil, insbesondere auf ein jeweilige Ende des jeweiligen Teils, aufgeschoben werden. Durch das Aufschieben des Aufschubkanals auf das jeweilige Ende wird eine zusätzliche Verzahnung und damit ein zusätzlicher Formschluss erreicht. Auch diese Aufschubkanäle des jeweiligen Verbindungsstifts können durch Umformung, vorzugsweise mittels Rollumformen, hergestellt sein.

Eine Ausgestaltung schlägt vor, dass der wenigstens eine Verbindungsstift einen C-förmigen Querschnitt in einer axiale Ebene aufweist, und zwar vorzugsweise über eine gesamte axiale Höhe H der beiden Teile/des Bewuchsschutzes. Damit wird die Stabilität des Verbindungsstifts verbessert, insbesondere wenn dieser als gebogenes Blechteil hergestellt ist.

Wie bereits erwähnt, ist es ferner vorteilhaft, wenn die beiden Teile eine durchweg konvexe geschlossene Außenwandung des Bewuchsschutzes ausbilden.

Der wenigsten eine Verbindungsstift kann gemäß einer weiteren Ausgestaltung je eine Führungsleiste aufweisen beziehungsweise ausbilden. Die jeweilige Führungsleiste ist dabei so ausgestaltet, dass diese axial in eine jeweilige Stiftaufnahme des ersten bzw. des zweiten Teils axial eingeführt werden kann. Durch ein Eingreifen der jeweiligen Führungsleiste in die zugehörige Stiftaufnahme des jeweiligen Teils kann somit der gewünschte Formschluss zum jeweiligen Teil hergestellt werden.

Vorteilhaft ist es ferner, wenn der wenigstens eine Verbindungsstift an seinem oberen Ende einen Überstand aufweist. Denn ein solcher Überstand kann dazu eingesetzt werden, eine Einschubbewegung des Verbindungsstifts beim axialen Einführen in die beiden Teile zu begrenzen. Ferner ist ein solcher Überstand nützlich, um Befestigungskräfte, die beim Eintreiben des Verbindungsstifts in das Erdreich entstehen, auf das jeweilige Teil und damit den Bewuchsschutz zu übertragen. Dadurch kann eine sichere Verankerung des Bewuchsschutzes erzielt werden. Dieser Überstand, der mittels Umformen einfach herstellbar ist, kann somit als Anschlag dienen, um eine axiale Einstecktiefe des Verbindungsstifts festzulegen/zu begrenzen.

Eine axiale Länge L des wenigstens einen Verbindungsstifts soll gemäß einer weiteren Ausgestaltung eine axiale Höhe H der beiden Teile übersteigen, und zwar vorzugsweise um wenigstens 30%, besonders bevorzugt um wenigstens 50 %. Durch eine solche Ausgestaltung ist sichergestellt, dass der Verbindungsstift mit ausreichender Tiefe im Erdreich verankert werden kann.

Entsprechend kann der wenigstens eine Verbindungsstift als ein Erdnagel ausgestaltet sein, der im Erdreich verankerbar ist, um den Bewuchsschutz knapp oberhalb des Erdreichs räumlich festzulegen.

Ein erfindungsgemäßer Bewuchsschutz lässt sich besonders effizient und mit geringen Kosten fertigen, wenn die beiden Teile symmetrisch, insbesondere identisch, ausgestaltet sind. Unter Identität kann hier eine Form verstanden werden, sodass beide Teile durch Symmetrieoperationen ineinander überführbar sind. Damit muss nur eine bestimmte Geometrie hergestellt werden und zwei solcher Teile können dann mit einem erfindungsgemäßen Verbindungsstift zusammen einen erfindungsgemäßen Bewuchsschutz ausbilden.

Die Erfindung schlägt somit vor, dass die beiden Teile mittels des wenigstens einen Verbindungsstifts, also insbesondere mittels zwei solcher Verbindungsstifte, lösbar miteinander verbunden sind, wobei dies wie erläutert formschlüssig erfolgt. Hierbei ist es bevorzugt, wenn der wenigstens eine Verbindungsstift entgegen einer Einschubrichtung aus beiden Teilen wieder herausgezogen werden kann, sodass der Bewuchsschutz einfach demontierbar bleibt. In einer finalen Montageposition, in welcher der Bewuchsschutz im Erdreich verankert ist und den jeweiligen Pfosten vor Pflanzen abschirmt, ist es hingegen so, dass aufgrund des jeweiligen Formschlusses quer zu der Einschubrichtung der Verbindungsstift von dem ersten Teil als auch von dem zweiten Teil in Position gehalten bleibt.

In einer finalen Montageposition, also insbesondere an einem Pfosten, können die beiden Teile wie erläutert eine umlaufende Außenwandung des Bewuchsschutzes ausbilden. Diese Außenwandung ist bevorzugt geschlossen umlaufend und/oder mit durchweg konvexer Form ausgestaltet. Bei solchen Ausgestaltungen können somit Pflanzen, die beispielsweise an einem Pfosten empor wachsen in unmittelbarer Nähe des Bewuchsschutzes vollständig mithilfe eines Mähwerkzeugs entfernt werden.

Der Bewuchsschutz kann in der Längsrichtung wenigstens 10 cm, vorzugsweise aber wenigstens 25 cm, hoch sein, um entsprechende Mäharbeiten zu ermöglichen. Dies kann auf Ausgestaltungen hinauslaufen, bei der der Bewuchsschutz in der Längsrichtung wenigstens so lang ist als der Bewuchsschutz quer zur Längsrichtung breit ist.

Der Bewuchsschutz kann auch eine Kabelführung umfassen, die insbesondere als ein Kabelkanal ausgestaltet sein kann. Diese Kabelführung ist bevorzugt innerhalb der erwähnten Außenwandung des Bewuchsschutzes angeordnet, und zwar vorzugsweise derart, dass in der finalen Montageposition die Kabelführung in einem Zwischenraum zwischen Pfosten und Bewuchsschutz angeordnet ist. Dadurch sind die Kabel sicher vor den Mähwerkzeugen geschützt.

Ferner ist es vorteilhaft, wenn der Bewuchsschutz wenigstens einen Abstandshalter umfasst; bevorzugt können auch zwei solcher Abstandshalter gegenüberliegend angeordnet sein. In der finalen Montageposition, beispielsweise wenn der Bewuchsschutz an einem Pfosten montiert ist, definiert der jeweilige Abstandshalter einen Zwischenraum zwischen der Innenwandung des Bewuchsschutzes und dem zu schützenden Anlagenteils/Pfosten. Mit dem Abstandshalter kann somit ein Abstand zwischen der Innenwandung und dem zu schützenden Anlagenteil/Pfosten festgelegt werden.

Ferner kann der Bewuchsschutz auch wenigstens eine zusätzliche Befestigungsaufnahme aufweisen, beispielsweise ausgestaltet an der Innenseite eines der beiden Teile, in die ein, insbesondere mehrteiliges, zusätzliches Verankerungselement (also beispielsweise ein zusätzlicher Erdnagel) einführbar ist. Dadurch kann die Verankerung des Bewuchsschutzes im Erdreich verbessert werden.

Zur Lösung der Aufgabe sieht die Erfindung auch eine Photovoltaik-(PV-)Anlage vor, die mehrere PV-module umfasst, wobei diese Module an einer Tragkonstruktion angeordnet sind, die Pfosten aufweist, die ihrerseits im Erdreich verankert sind. Die Pfosten können dabei in an sich bekannter Weise durch horizontal verlaufende Riegel miteinander verbunden sein. Erfindungsgemäß ist nun vorgesehen, dass an wenigstens einzelne der Pfosten jeweils ein Bewuchsschutz montiert ist, wie er zuvor erläutert wurde und/oder wie er hier beansprucht wird.

Zu erwähnen ist noch, dass die jeweilige seitliche Öffnung, die beispielsweise das erste Teil ausbilden kann, so dimensioniert sein kann, dass das erste Teil quer zu einer Längsrichtung des jeweiligen Pfostens (also in horizontaler Richtung) entlang einer Erstmontagerichtung auf den Posten bis in eine finale Montageposition aufgeschoben werden kann. Besonders günstig ist es hierbei, wenn beide Teile auf diese Art und Weise ausgestaltet sind. Das erste als auch das zweite Teil können somit im Querschnitt C-förmig ausgestaltet sein. Dabei können die Teile in der finalen Montageposition über eine jeweilige Außenkante des Pfostens nach innen überstehen.

Der Zwischenraum, der zwischen einer Außenwandung des Bewuchsschutzes und dem jeweiligen Pfosten in der finalen Montageposition entsteht, kann bevorzugt mit einem Schüttgut befüllt sein, also beispielsweise mit Kies, Splitt oder Magerbeton, wodurch eine zusätzliche Verankerung des Bewuchsschutzes erzielbar ist.

Die Pfosten können in an sich bekannter Weise in einen jeweiligen unteren Befestigungsabschnitt und einen damit verbundenen oberen Halteabschnitt aufgeteilt sein, wobei an dem Halteabschnitt die Riegel und/oder die PV-Module montiert werden. Die besagten Befestigungsabschnitte können in Form eines jeweiligen Rammprofils, vorzugsweise mit C- oder I-förmigen Querschnitt, ausgestaltet sein. Die Rammprofile können zunächst in das Erdreich eingerammt werden. Sofern das Rammprofil eine seitliche Öffnung aufweist, kann diese durch den Bewuchsschutz abgedeckt werden, sodass keinerlei Pflanzen mehr innerhalb dieser Nische empor wachsen können.

Die Erfindung wird nun anhand von Ausführungsbeispielen näher beschrieben, ist aber nicht auf diese Ausführungsbeispiele beschränkt. Weitere Ausbildungen der Erfindung können aus der nachfolgenden Beschreibung eines bevorzugten Ausführungsbeispiels in Verbindung mit der allgemeinen Beschreibung, den Ansprüchen sowie den Zeichnungen gewonnen werden.

Bei der folgenden Beschreibung verschiedener bevorzugter Ausführungsformen der Erfindung erhalten in ihrer Funktion übereinstimmende Elemente auch bei abweichender Gestaltung oder Formgebung übereinstimmende Bezugszahlen.

Es zeigt:
- Fig. 1: eine herkömmliche Photovoltaikanlage (PV-Anlage) mit mehreren parallel verlaufenden Reihen aus vertikal übereinander angeordneten bifazialen PV-Modulen,
- Fig. 2: eine Detailansicht auf eine Reihe der PV-Anlage aus Figur 1,
- Fig. 3: ein erstes Beispiel einer erfindungsgemäß ausgestalteten PV-Anlage, wobei die Seitenansicht teilweise als Schnittansicht gezeigt ist
- Fig. 4: eine weitere Seitenansicht auf die erfindungsgemäß ausgestaltete PV-Anlage der Figur 3,
- Fig. 5: eine Aufsicht von oben auf einen erfindungsgemäßen Bewuchsschutz, der einen Pfosten einer Tragkonstruktion einer PV-Anlage abschirmt,
- Figur 6: eine analoge Ansicht wie diejenige der Figur 5, wobei der Pfosten mittels Längsprofilen von abweichender Geometrie ausgestaltet ist,
- Figur 7: eine Ansicht von oben auf das erste Teil eines erfindungsgemäßen Bewuchsschutzes,
- Figur 8: eine Ansicht von oben auf den zweiten Teil eines erfindungsgemäßen Bewuchsschutzes,
- Figur 9: eine Ansicht von oben auf einen erfindungsgemäßen Verbindungsstift,
- Figur 10: eine perspektivische Ansicht auf den Verbindungsstift der Figur 9 mit Details des oberen und unteren Endes,
- Figur 11: und Figur 12 jeweils perspektivische Ansichten der beiden Teile des Bewuchsschutzes,
- Figur 13: ein vollständig assemblierter Bewuchsschutz in einer Ansicht von unten,
- Figur 14: der fertig assemblierte Bewuchsschutz der Figur 13 von oben gesehen und schließlich
- Figur 15: eine perspektivische Ansicht auf einen zweiteiligen Pfosten einer Tragkonstruktion eine erfindungsgemäßen PV-Anlage, wobei knapp oberhalb des Erdreiches ein erfindungsgemäßer Bewuchsschutz an dem Pfosten montiert ist.

Die Figur 1 zeigt eine herkömmliche Photovoltaik(PV)-Anlage 1 mit mehreren parallel verlaufenden Reihen aus vertikal übereinander angeordneten bifazialen PV-Modulen 2, die von einer Tragkonstruktion 3, die vertikal verlaufende Pfosten 4 und horizontal verlaufende Riegel 24 umfasst, getragen werden. Solche PV-Anlagen 1 werden im Freien aufgestellt, wobei der freie Raum 30 der zwischen den beiden Reihen besteht, aber auch der freie Raum 32, der unterhalb der untersten Reihe an horizontal verlaufenden Riegeln 24 besteht, landwirtschaftlich genutzt werden kann.

Die Figur 2 zeigt eine detailliertere Ansicht einer einzelnen Reihe der PV-Anlage 1 aus Figur 1: Man erkennt, dass die Pfosten 4 in einen bodenseitigen Befestigungsabschnitt 26 und einen damit verbundenen und darüber angeordneten Halteabschnitt 25 aufgeteilt sind. Beide Abschnitte 25 und 26 sind mittels metallischer Längsprofile 28 realisiert, wobei der Befestigungsabschnitt 26 in Form eines C-förmigen Rammprofils 21 ausgestaltet ist, welches in das Erdreich 17 eingerammt wurde, um den Pfosten 4 im Erdreich 17 zu verankern. Man erkennt ferner, wie die einzelnen PV-Module 2 mittels jeweiliger Modulhalter 31 an den horizontal verlaufenden Riegeln 24 befestigt sind. Die in Figur 2 schraffiert dargestellte Fläche, die der aktiven Fläche der PV-Module 2 entspricht, definiert dabei eine Modulebene 23 der Reihe der PV-Anlage 1.

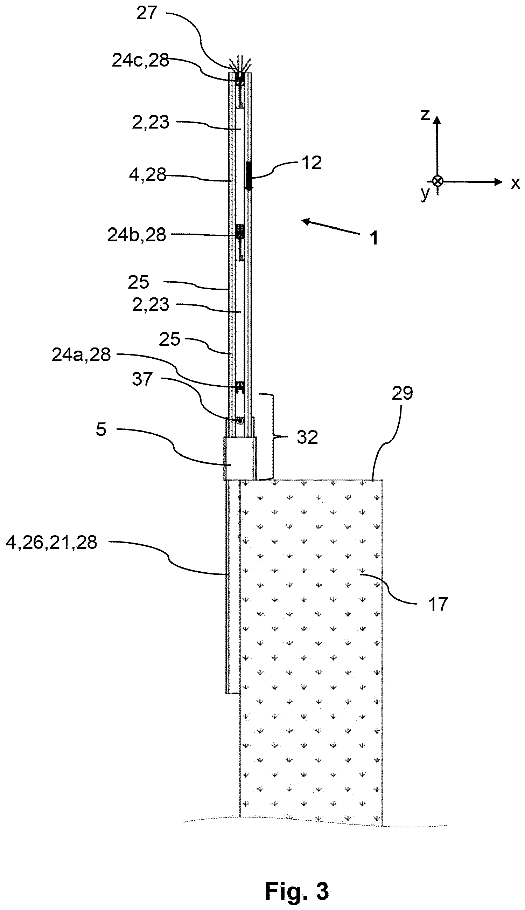

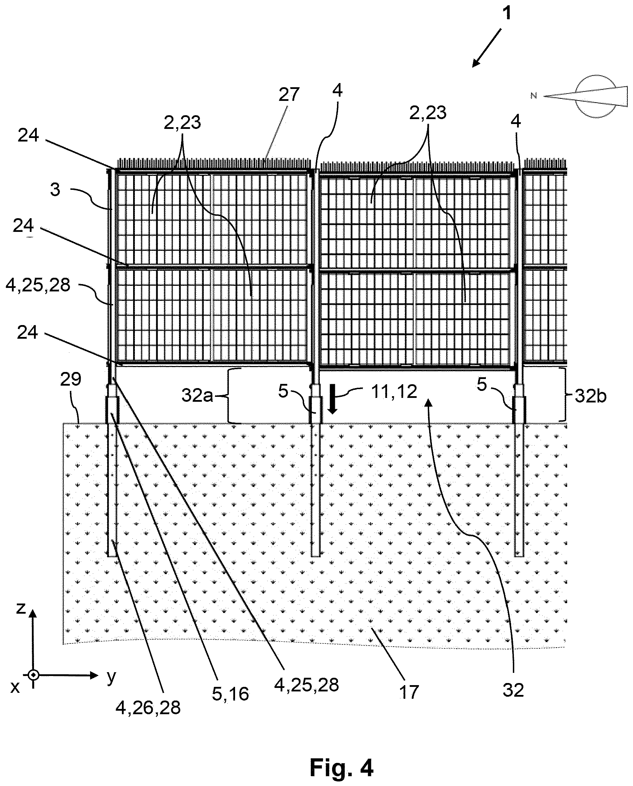

Die Figuren 3 und 4 zeigen ein erstes Beispiel einer erfindungsgemäß ausgestalteten PV-Anlage 1, wobei in Figur 3 der Blick von Süden in Längsrichtung der Reihe auf einen Pfosten 4 der Tragkonstruktion 3 der PV-Anlage 1 fällt. Man erkennt auch in Figur 3 wieder den unteren Befestigungsabschnitt 26 des Pfostens 4, der als Rammprofil 21 ausgestaltet ist und in das Erdreich 17 eingerammt ist. Der obere Halteabschnitt 25 des Pfostens 4 ist mittels einer Verschraubung 37 mit dem im Erdreich verankerten Befestigungsabschnitt 26 in einem Überlappungsbereich verbunden.

Oberhalb der Verschraubung 37 erkennt man in Figur 3 einen ersten untersten Riegel 24 in der Querschnittsansicht, wobei der Riegel 24a in Blickrichtung auf die Zeichnung verläuft. Darüber angeordnet befindet sich noch ein mittlerer Riegel 24b, sowie ein oberster Riegel 24c am oberen Ende des Pfostens 4, wo auch ein Vogelschutz 24 montiert ist.

In Figur 3 erkennt man auch, dass an dem Pfosten 4, genauer an dem Befestigungsabschnitt 26, noch unterhalb des untersten Riegels 24, ein erfindungsgemäßer Bewuchsschutz 5 montiert ist. Der Bewuchsschutz 5 sitzt dabei auf der Erdoberfläche 29 auf und deckt in vertikaler Richtung einen Großteil des Befestigungsabschnitts 26 ab, der außerhalb des Erdreichs 17 liegt. Mit der geschweiften Klammer ist dabei ein Freiraum 32 angedeutet, der zwischen der Erdoberfläche 29 und dem untersten Riegel 24a besteht (vergleiche dafür insbesondere die Figur 1). In diesem Freiraum 32 wachsen Pflanzen, die regelmäßig gemäht werden müssen, um zu verhindern, dass die jeweilige Pflanze über den untersten Riegel 24a hinaus nach oben wächst und dann zu einer relevanten Verschattung der aktiven Fläche des untersten PV-Moduls 2 führt. Durch das Vorsehen des Bewuchsschutzes 5 ist dieses Mähen wesentlich vereinfacht, weil einerseits die Gefahr gebannt werden kann, dass die Schneidwerkzeuge des Mähwerkzeugs die Metallprofile des Pfostens 4 beschädigen und weil andererseits der Bewuchsschutz 5 sicherstellt, dass Pflanzen sich nicht aus dem Freiraum 32 ausbreiten und bis in die seitliche Öffnung des C-förmigen Rammprofils 21 einwachsen, um dort, also innerhalb des Rammprofils 21 emporzuwachsen. Denn gerade diese Pflanzen wären besonders schwierig zu mähen, bzw. es wäre eine Beschädigung des Pfostens 4 beim Beseitigen mittels Mähen zu befürchten.

Figur 4 bietet eine Ansicht von Westen auf die erfindungsgemäße PV-Anlage 1 der Figur 3: Zu sehen sind drei Pfosten 4, die in einer Reihe aufgestellt sind, wobei durch die die Pfosten 4 verbindenden Riegel 24 jeweilige Montagefelder definiert sind, in denen die jeweiligen bifazialen PV-Module 2 angeordnet sind. Auch hier erkennt man den jeweiligen Freiraum 32, der je nach vertikaler Lage des untersten Riegels 24 mal mehr oder mal weniger hoch ausfallen kann.

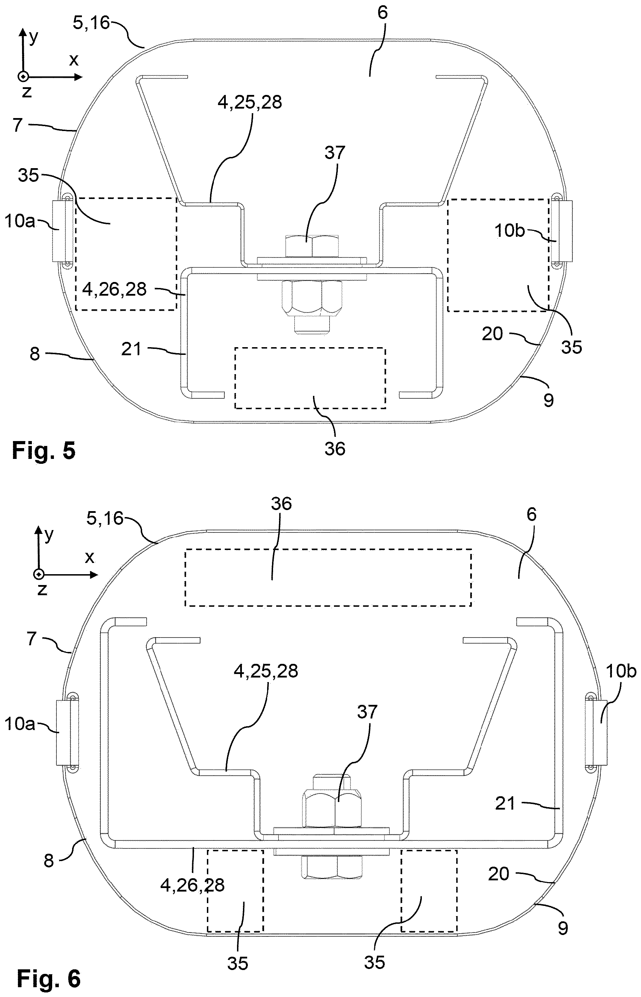

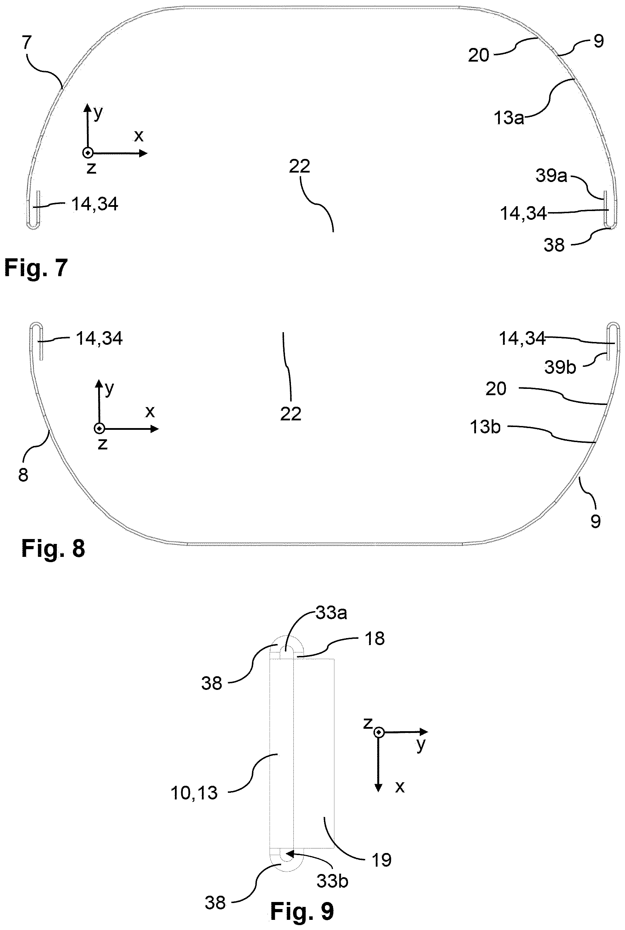

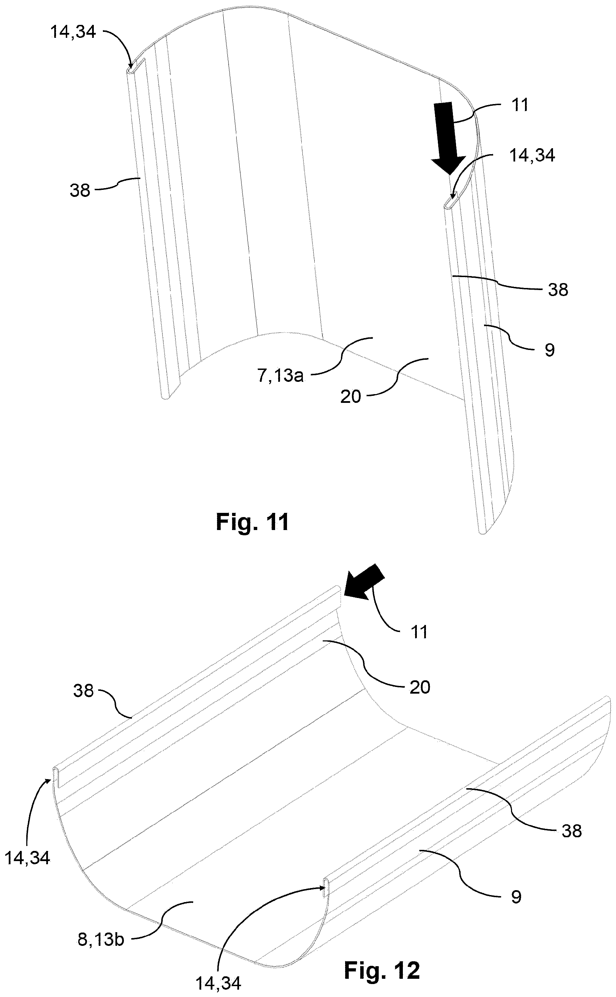

Die Figur 5 zeigt eine Detailansicht von oben der finalen Montageposition 16 des Bewuchsschutzes 5 am Pfosten 4. Wie man erkennt, umfasst der Bewuchsschutz 5 ein erstes Teil 7, ein zweites Teil 8 sowie zwei Verbindungsstifte 10a und 10b. Diese Komponenten 7, 8, 10a, 10b, die jeweils als gebogene metallische Blechteile 13 ausgestaltet sind, sind einzeln in den Figuren 7-10 illustriert. Die Figuren 11 und 12 zeigen dabei, dass die beiden Bleche 13a und 13b, die die beiden Teile 7, 8 bilden, identisch ausgestaltet sind. Jedes dieser beiden Teile 7, 8 bietet an seinem jeweiligen Ende eine Stiftaufnahme 14, die mittels einer jeweiligen Umbiegung 38 realisiert wurde. Alle diese Stiftaufnahmen 14 sind dabei als axiale Führungskanäle 34 ausgestaltet, in die der jeweilige Verbindungsstift 10 von oben entlang der in Figur 11 illustrierten Einschubrichtung 11 axial eingeschoben werden kann.

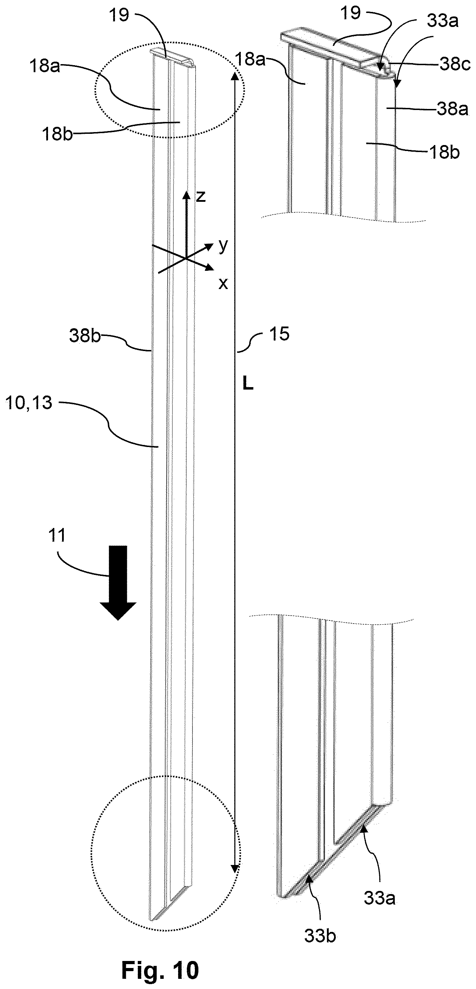

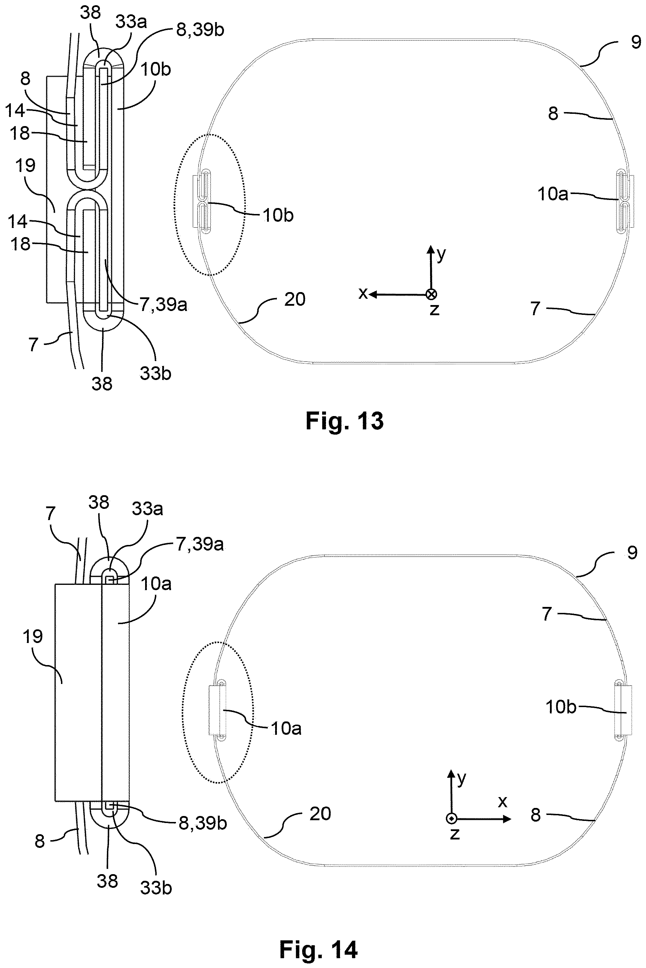

In der Ansicht von unten der Figur 13 erkennt man, dass eine jeweilige Führungsleiste 18 des Verbindungsstifts 10 in die jeweilige Stiftaufnahme 14 eingreift bzw. in axialer z-Richtung von oben eingeschoben wurde. Wie man gut in Figur 10 erkennt, sind diese beiden Führungsleisten 18a und 18b des Verbindungsstifts 10 durch entsprechende Umbiegungen 38a und 38b ausgestaltet worden. Aufgrund dieser Umbiegungen 38a und 38b weist der in Figur 10 gezeigte Verbindungsstift 10 aber auch zwei Aufschubkanäle 33a und 33b auf, die sich entlang der gesamten Länge L des Verbindungsstifts 10 erstrecken. Diese Aufschubkanäle 33 erkennt man auch in der Ansicht von unten der Figur 13 und in der Ansicht von oben der Figur 14. Dabei zeigt die Figur 13, dass das Ende 39b des zweiten Teils 8 in den Aufschubkanal 33a eingreift, während das Ende 39a des ersten Teils 7 in den Aufschubkanal 33b eingreift. Beim Verbinden der beiden Teile 7, 8 durch axiales Einschieben des Verbindungsstifts 10 entlang der Einschubrichtung 11 in die beiden Stiftaufnahmen 14 wird somit der jeweilige Aufschubkanal 33 auf das jeweilige Ende 39 des jeweiligen Teils 7, 8 aufgeschoben. Bei der Ausgestaltung der Figuren 13 und 14 gilt dies sowohl für den linken Verbindungsstift 10a als auch für den identisch ausgebildeten rechten Verbindungsstift 10b.

In den Figuren 7 und 8 erkennt man, dass die beiden Teile 7, 8 nicht nur identisch ausgestaltet sind, sondern auch achsensymmetrisch in Bezug auf die in der Figur illustrierte y-Achse.

Anhand der Figur 13, 14 und 15 (die die finale Montageposition 16 des Bewuchsschutzes 5 am Pfosten 4 illustriert) kann auch gut nachvollzogen werden, dass jeder der beiden gezeigten Verbindungsstifte 10a und 10b eine jeweilige mechanische Verbindung herstellt zwischen den beiden Teilen 7 und 8 und dass zudem jeder der beiden Verbindungsstifte 10a, 10b zu jedem der beiden Teile 7 und 8 jeweils einen Formschluss ausbildet, nämlich denjenigen Formschluss, der durch das Ineinandergreifen der Führungsleisten 18 des Verbindungsstifts 10 und der Stiftaufnahmen 14 der beiden Teile 7 und 8 entsteht sowie zusätzlich den Formschluss, der aufgrund des Ineinandergreifens der beiden Enden 39a und 39b der beiden Teile 7, 8 und dem jeweiligen Aufschubkanal 33a und 33b des Verbindungsstifts 10 entsteht.

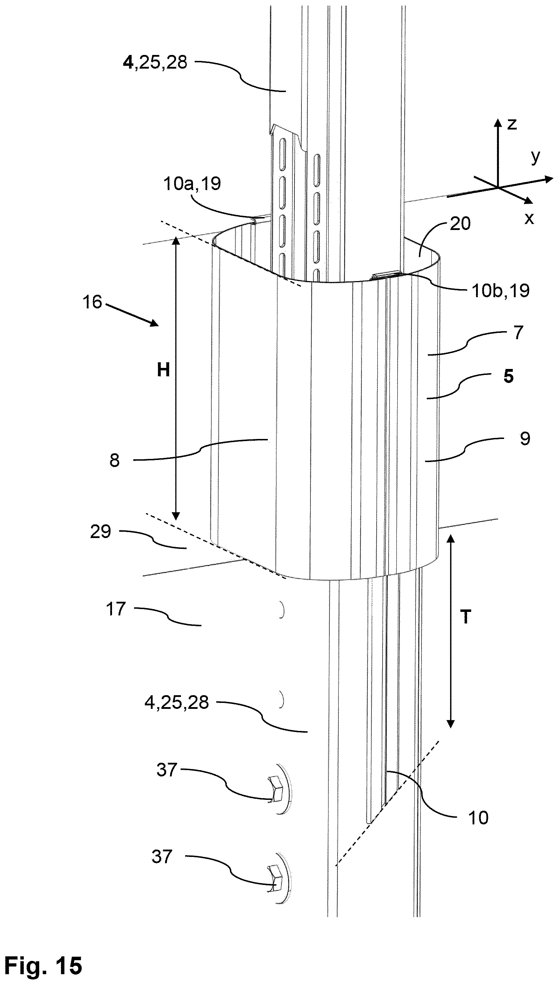

Anhand der Figur 15 kann man dabei gut erkennen, dass der jeweilige Formschluss über die gesamte axiale Höhe H des Bewuchsschutzes 5 besteht, sobald der Verbindungsstift 10 vollständig eingeführt ist. Der jeweilige Verbindungsstift 10 dient dabei zusätzlich als Erdnagel und wird entsprechend in das Erdreich 17 eingetrieben, wie es Figur 15 illustriert.

Anhand der Figur 15 aber auch der Figuren 5 und 6 sieht man, dass der jeweilige Verbindungsstift 10 innenseitig entlang der Innenwandung 20 des Bewuchsschutzes 5 verläuft, sodass die Außenwandung 9 des Bewuchsschutzes 5 vollkommen geschlossen um den Pfosten 4 umlaufend und durchweg konvex ausgestaltet ist.

Anhand der Figuren 5 und 6 kann man gut nachvollziehen, dass ein und derselbe Bewuchsschutz 5 auch bei unterschiedlichen Pfosten-Geometrien einsetzbar ist. So zeigt die Figur 5 das Beispiel eines C-förmigen Rammprofils 21, welches Rücken an Rücken an einem oberen Halteabschnitt 25 anliegt, wobei die beiden Längsprofile 28 mittels einer Verschraubung 37 miteinander verbunden sind. Beim Beispiel der Figur 6 wird ein sehr viel größeres C-förmiges Rammprofil 21 eingesetzt, wobei dort das obere Längsprofil 28, welches den Halteabschnitt 25 ausbildet, Rücken an Bauch, also auf der Innenseite des unteren Befestigungsabschnitts 26, anliegt und dort ebenfalls verschraubt ist.

In den Figuren 5 und 6 kann man auch die Platzierung von Abstandshaltern 35 und die Ausgestaltung eines Kabelkanals 36 in dem Zwischenraum 6 erkennen, der zwischen der Innenwandung 20 des Bewuchsschutzes 5 und dem Pfosten 4 besteht. Dieser Zwischenraum 6 kann zur besseren Verankerung des Bewuchsschutzes 5 mit Kies befüllt werden.

Soll ein Bewuchsschutz 5 wieder vom Pfosten 4 entfernt werden, so muss zunächst der Verbindungsstift 10 nach oben entgegen der Einschubrichtung 11 herausgezogen werden, wodurch der bestehende Formschluss aufgelöst wird, sodass die beiden Teile 7, 8 wieder voneinander gelöst werden können.

Anhand der Ansicht von unten der Figur 13 kann man aber gut nachvollziehen, dass in der finalen Montageposition 16, also dann wenn der Verbindungsstift 10 vollständig in die beiden Teile 7, 8 eigengesteckt ist bis zu demjenigen Anschlag, der durch den Überstand 19 des Verbindungsstifts 10 (vgl. Figur 10 und 15) definiert ist, die Position des Verbindungsstifts 10 in x- und y-Richtung festgelegt ist. Aufgrund der Formgebung des Verbindungsstift 10 ist dabei auch eine mechanische Verbindung zwischen den beiden Teilen 7, 8 hergestellt. Aufgrund der beiden Umbiegungen 38 fungiert der Verbindungsstift 10 hier als eine Art Klammer, die die beiden Enden 39a und 39b des ersten bzw. zweiten Teils 7, 8 in der y-Richtung zusammenhält und zudem auch entlang der x-Richtung zueinander ausrichtet.

Zusammenfassend wird ein einfach aus wenigstens drei Teilen herstellbarer Bewuchsschutz 5 vorgestellt, bei dem mittels wenigstens eines Verbindungsstifts 10 zwei Teile 7, 8, die eine umlaufende Außenwandung 9 zum Abschirmen von Pflanzen ausbilden, mittels eines jeweiligen Formschlusses mechanisch miteinander verbunden werden können. Kennzeichnend für den erfindungsgemäßen Ansatz kann dabei sein, dass die beiden Teile 7 und 8 zueinander keinen direkten Formschluss ausbilden, dass aber jedes der beiden Teile 7 und 8 jeweils formschlüssig mit dem wenigstens einen Verbindungsstift 10 verbunden ist, sobald der Verbindungsstift 10 vollständig in beide Teile 7, 8, vorzugsweise in axialer Richtung, eingeführt ist (vgl. Figur 15).

### Bezugszeichenliste

- 1: Photovoltaikanlage
- 2: Photovoltaikmodul
- 3: Tragkonstruktion (von 1 zum Tragen von 2)
- 4: Pfosten (von 3)
- 5: Bewuchsschutz (zum Abschirmen von 4 gegenüber Bewuchs)
- 6: Zwischenraum (zwischen 4 und 5)
- 7: erstes Teil (von 5 - wird quer auf den 4 aufgeschoben)
- 8: zweites Teil (von 5 - wird in Längsrichtung von 4 auf/in 7 geschoben)
- 9: Außenwandung (gebildet durch 5 bzw. 7 und 8; läuft um 4 um)
- 10: Verbindungsstift
- 11: Einschubrichtung (von 10 in 7/8)
- 12: Längsrichtung (von 4 = z-Richtung)
- 13: Blechteil
- 14: Stiftaufnahme
- 15: Länge (von 10 gemessen in z-Richtung)
- 16: finale Montageposition (von 5)
- 17: Erdreich
- 18: Führungsleiste (von 10)
- 19: Überstand (von 10, zur Begrenzung der Einschubbewegung)
- 20: Innenwandung (von 5 bzw. von 7/8)
- 21: Rammprofil
- 22: seitliche Öffnung (von 21)
- 23: Modulebene
- 24: Riegel (verbinden 4 miteinander)
- 25: Halteabschnitt
- 26: Befestigungsabschnitt
- 27: Vogelschutz
- 28: Längsprofil
- 29: Erdoberfläche
- 30: Freifläche (kann für landwirtschaftliche Bewirtschaftung genutzt werden)
- 31: Modulhalter
- 32: Freiraum (zwischen 3 und 29)
- 33: Aufschubkanal (gebildet von 10)
- 34: Führungskanal
- 35: Abstandshalter
- 36: Kabelführung
- 37: Verschraubung
- 38: Umbiegung
- 39: Ende (von 7, 8)

## Patentansprüche

1. **Bewuchsschutz** (5) zum Abschirmen von Anlagenteilen, insbesondere zum Abschirmen eines Pfostens (4) einer Tragkonstruktion (3) einer im freien Feld errichteten Photovoltaikanlage (1), von Pflanzen, die im Erdreich (17) in der Nähe der Anlagenteile / des Pfostens (4) wachsen, bis zu einer axialen Höhe H über dem Erdreich (17), **dadurch gekennzeichnet,**
- **dass** der Bewuchsschutz (5) ein erstes Teil (7), ein zweites Teil (8) und wenigstens einen Verbindungsstift (10a, 10b) umfasst,
- wobei die beiden Teile (7, 8) mit Hilfe des wenigstens einen Verbindungsstifts (10a, 10b) miteinander verbunden sind und
- wobei der wenigstens eine Verbindungsstift (10a, 10b) zu jedem der beiden Teile (7, 8) jeweils einen Formschluss ausbildet.

2. Bewuchsschutz (5) nach Anspruch 1, wobei der Formschluss zwischen Verbindungsstift (10) und jeweiligem Teil (7, 8) jeweils über eine gesamte axiale Höhe H des Bewuchsschutzes (5) besteht, wenn der wenigstens eine Verbindungsstift (10) vollständig in das jeweilige Teil (7, 8) eingeführt ist.

3. Bewuchsschutz (5) nach einem der vorhergehenden Ansprüche, wobei der Bewuchsschutz (5) zwei, vorzugsweise gleichartig oder identisch ausgebildete, Verbindungsstifte (10a, 10b) umfasst, die jeweils einen Formschluss zu beiden Teilen (7, 8) ausbilden und eine jeweilige mechanische Verbindung zwischen den beiden Teilen (7, 8) herstellen,
- vorzugsweise wobei der Bewuchsschutz (5) mittels der beiden Verbindungsstifte (10a, 10b) beidseitig im Erdreich (17) verankerbar ist oder verankert ist.

4. Bewuchsschutz (5) nach einem der vorhergehenden Ansprüche, wobei die beiden Teile (7, 8), vorzugsweise und der wenigstens eine Verbindungsstift (10), als umgebogene, vorzugsweise mittels Rollumformen hergestellte, metallische Blechteile (13a, 13b) ausgestaltet sind.

5. Bewuchsschutz (5) nach einem der vorhergehenden Ansprüche, wobei die beiden Teile (7, 8) jeweils, vorzugsweise beidseitig, wenigstens eine Stiftaufnahme (14), vorzugsweise in Form eines axialen Einführkanals (34), ausbilden, in die der jeweilige Verbindungstift (10a/10b) axial einführbar ist,
- besonders bevorzugt wobei die Stiftaufnahmen (14) durch eine Umformung, vorzugsweise eine Rollumformung, des jeweiligen Teils (7, 8) hergestellt sind.

6. Bewuchsschutz (5) nach dem vorhergehenden Anspruch, wobei die Stiftaufnahmen (14) innenseitig an einer Innenwandung (20) des Bewuchsschutzes (5) ausgestaltet sind,
- sodass der jeweilige Verbindungsstift (10) innenseitig in das jeweilige Teil (7,8) eingesteckt ist und/oder entlang der Innenwandung (20) verläuft.

7. Bewuchsschutz (5) nach einem der vorhergehenden Ansprüche, wobei der wenigstens eine Verbindungsstift (10) aus metallischem Blech durch Umformung, vorzugsweise mittels Rollumformen, hergestellt ist und/oder
- wobei die beiden Teile (7,8) eine durchweg konvexe geschlossene Außenwandung (9) des Bewuchsschutzes (5) ausbilden.

8. Bewuchsschutz (5) nach einem der vorhergehenden Ansprüche, wobei der wenigstens eine Verbindungsstift (10) einen linken und einen rechten Aufschubkanal (34) ausbildet, der auf jeweilige Enden (39a, 39b) der beiden Teile (7, 8) aufgeschoben werden kann, wenn der Verbindungsstift (10) in die beiden Teile (7, 8) eingeführt wird.

9. Bewuchsschutz (5) nach einem der vorhergehenden Ansprüche, wobei der wenigstens eine Verbindungsstift (10) einen C-förmigen Querschnitt in einer Axialebene aufweist, vorzugsweise über eine gesamte axiale Höhe H der beiden Teile (7, 8).

10. Bewuchsschutz (5) nach einem der vorhergehenden Ansprüche, wobei der wenigstens eine Verbindungsstift (10) je eine Führungsleiste (18a, 18b) aufweist, die zum axialen Einführen in eine jeweilige Stiftaufnahme (14) des ersten Teils (7) beziehungsweise des zweiten Teils (8) ausgestaltet ist,
- insbesondere wobei durch ein Eingreifen der jeweiligen Führungsleiste (18a/18b) in die zugehörige Stiftaufnahme (14) der Formschluss zum jeweiligen Teil (7/8) herstellbar ist.

11. Bewuchsschutz (5) nach einem der vorhergehenden Ansprüche, wobei der wenigstens eine Verbindungsstift (10) an seinem oberen Ende einen Überstand (19) aufweist, der
- dem Begrenzen einer Einschubbewegung des Verbindungsstifts (10) beim axialen Einführen in die beiden Teile (7, 8) und/oder
- der Übertragung von Befestigungskräften beim Eintreiben des Verbindungsstifts (10) in das Erdreich (17) dient.

12. Bewuchsschutz (5) nach einem der vorhergehenden Ansprüche, wobei eine axiale Länge L (15) des wenigstens einen Verbindungsstifts (10) eine axiale Höhe H der beiden Teile (7, 8) übersteigt, vorzugsweise um wenigstens 50%.

13. Bewuchsschutz (5) nach einem der vorhergehenden Ansprüche, wobei der wenigstens eine Verbindungsstift (10) als ein Erdnagel ausgestaltet ist, der im Erdreich (17) verankerbar ist, um den Bewuchsschutz (5) knapp oberhalb des Erdreichs (17) räumlich festzulegen.

14. Bewuchsschutz (5) nach einem der vorhergehenden Ansprüche, wobei die beiden Teile (7,8) symmetrisch, vorzugsweise identisch, ausgestaltet sind,
- insbesondere derart, dass beide Teile (7, 8) durch Symmetrieoperationen ineinander überführbar sind.

15. Bewuchsschutz (5) nach einem der vorhergehenden Ansprüche, wobei die beiden Teile (7, 8) mittels des wenigstens einen Verbindungsstifts (10) lösbar, vorzugsweise und formschlüssig, miteinander verbunden sind,
- vorzugsweise wobei der wenigstens eine Verbindungsstift (10) entgegen einer Einschubrichtung (11) aus beiden Teilen (7,8) herausgezogen werden kann und/oder in einer finalen Montageposition (16) aufgrund des jeweiligen Formschlusses quer zu der Einschubrichtung (11) von dem ersten Teil (7) und von dem zweiten Teil (8) in Position gehalten bleibt.
